Europäisches Patentamt

European Patent Office

Office européen des brevets

(11) Publication number: **0 107 295**
**B1**

# EUROPEAN PATENT SPECIFICATION

(45) Date of publication of patent specification: **16.08.90**

(21) Application number: **83304991.9**

(22) Date of filing: **30.08.83**

(51) Int. Cl.⁵: **H 04 N 5/92**

(54) **Video disc type recording and reproducing system.**

(30) Priority: **30.08.82 JP 149100/82**
**03.02.83 JP 15273/83**
**18.03.83 JP 45780/83**
**30.07.83 JP 119400/83**

(43) Date of publication of application:
**02.05.84 Bulletin 84/18**

(45) Publication of the grant of the patent:
**16.08.90 Bulletin 90/33**

(84) Designated Contracting States:
**DE GB NL**

(56) References cited:
**EP-A-0 061 050**
**US-A-4 085 426**

**PATENTS ABSTRACTS OF JAPAN, vol. 5, no.
133 (E-71) 805r, 25th August 1981; & JP - A - 56
69 984 (TOKYO SHIBAURA DENKI K.K.) 11-06-
1981**

(73) Proprietor: **PIONEER ELECTRONIC
CORPORATION**
**No. 4-1, Meguro 1-chome
Meguro-ku Tokyo 153 (JP)**

(72) Inventor: **Higashi, Ryoji Nansei Heights
Sakamoto 203**
**No 12-16 Kamiishida 4-chome
Kofu-shi Yamanashi (JP)**
Inventor: **Nomura, Satoru**
**No. 733 Ooshimojo Shikishima-cho
Nakakoma-gun Yamanashi (JP)**
Inventor: **Kuroda, Kazuo Pioneer Electronic
Corporation**
**Tokorozawa Works No 2610, Hanazono 4-chome
Tokorozawa-shi Saitama (JP)**

(74) Representative: **Brunner, Michael John et al
GILL JENNINGS & EVERY 53-64 Chancery Lane
London WC2A 1HN (GB)**

Courier Press, Leamington Spa, England.

(56) References cited:

**IEEE TRANSACTIONS ON BROADCAST AND TELEVISION RECEIVERS, vol. BTR 20, no. 3, August 1974, pages 217-229, IEEE, New York, US; G.C. KENNEY et al.: "Signal processing for a video disc system (VLP)"**

**ELECTRONIC COMPONENTS AND APPLICATIONS, vol. 4, no. 3, May 1982, pages 131-141, Eindhoven, NL; J. MATULL: "ICs for compact disc decoders"**

## Description

The present invention relates to a video disc type recording and reproducing system with multiplexed video and audio signals, and, more particularly, to such a system in which interference between sidebands of the frequency-modulated video signal and the frequency-modulated audio signal is eliminated.

JP-A-56-69984 discloses a magnetic recording and reproducing device for video tapes which uses "sound traps" through which the processed luminance and chrominance signals are filtered and this document provides the basis for the preamble of claim 1.

Electronics Components and Applications, Vol. 4, No. 3, May 1982, features an article on ICs for Compact Disc decoders, the article demonstrating the use of digital encoding for recording onto audio compact discs.

A video disc type recording and reproducing system, for example as described in IEEE Transactions on Broadcast and Television Receivers, Vol. 20, No. 3, pages 217-229, typically comprises recording means and reproducing means, the recording means comprising a first frequency modulator for modulating a video signal, a second frequency modulator for modulating an audio signal, an adder circuit for adding the modulating video and audio signals, a limiter connected to an output of the adder circuit for pulse width modulating the output signal from the adder circuit, and an electrical/optical modulator connected to the limiter.

According to this invention such a system is modified by introducing filter means connected between an output of the first frequency modulator and the adder circuit for removing a frequency component of the frequency-modulated video signal which covers a frequency component of the frequency modulated audio signal from the second frequency modulator to prevent second and higher order sidebands of the modulated video signal interfering with the audio signal multiplexed with it and wherein the recording means further comprises a digital encoder connected in parallel with the second frequency modulator.

Preferably, the filter means comprises a band eliminating filter for removing only a lower secondary sideband of the frequency-modulated video signal. Alternatively, the filter means may comprise a high pass filter for passing components having a frequency higher than the lower secondary sideband of the modulated video signal or a band pass filter.

Preferably, the recording means further comprises a compensating circuit connected between the band eliminating filter and the adder circuit, the compensating circuit having a substantially constant gain and a group delay characteristic so that it substantially cancels out the group delay characteristic of the band eliminating filter.

Accordingly, since both the directly frequency modulated signal and a digitally encoded signal are recorded togther, either can be selectively reproduced.

Preferably the lower one of the secondary sidebands of the video RF signal, which overlaps the audio carrier frequencies, is removed by the filter means so that the audio signals are not influenced thereby. The elimination of the secondary or higher order sidebands of the video signal does not affect reproduction of the video signal since the frequency range necessary to reproduce the video signal spans only the primary sideband.

A preferred embodiment of the present invention will now be described and contrasted with the prior art with reference to the accompanying drawings, in which:-

Figure 1 is a block diagram of a typical conventional video disc type recording and reproducing system;

Figure 2a shows the frequency spectrum of frequency-modulated video and audio signals;

Figure 2b shows the frequency spectrum obtained with the present invention;

Figure 3 shows an embodiment of the present invention;

Figure 4 shows the frequency spectrum of frequency-modulated video and audio signals in the embodiment;

Figure 5 shows waveforms at various portions of the example of a reproducing system; and,

Figure 6 shows an embodiment of the reproducing system of the present invention.

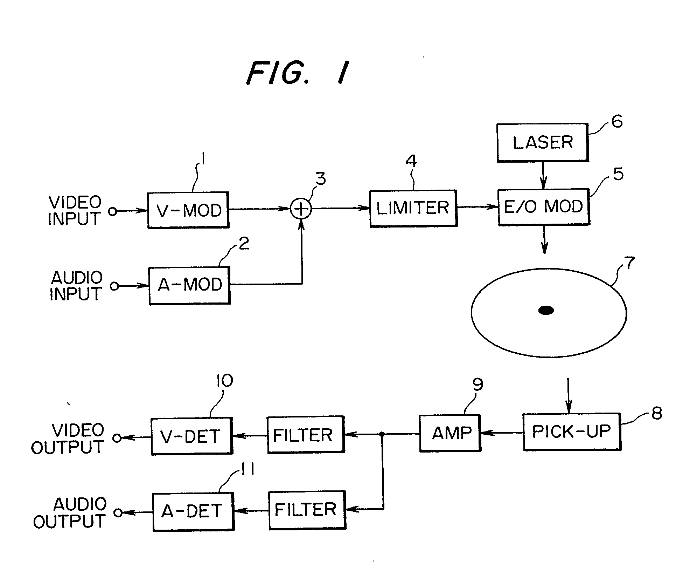

Systems in which video information as well as audio information is recorded on a video disc and are simultaneously reproduced are known, and an example thereof is shown in Figure 1. In Figure 1 a video carrier of, for example, 8,2 MHz is frequency-modulated with the video information by a frequency modulator 1 so that the sync level, the pedestal level and the white peak level thereof become, for example, 7,6 MHz, 8,1 MHz and 9.3 MHz, respectively.

At least one audio signal is also frequency-modulated by a frequency modulator 2, and outputs of the frequency modulators 1 and 2 are added by an adder circuit 3. An output of the adder circuit 3 is supplied to a limiter 4 by which an amplitude of the adder output is limited, and pulse width modulation is performed. An output of the limiter is supplied to an electrical/ optical (E/ O) modulator 5 in which a laser beam from a laser source 6 is modulated by the limiter output, and the resultant signal is recorded on a video disc 7 in a known manner, Upon reproduction, the recorded information is picked up by a pick-up 8 and amplified by an amplifier 9. An output of the amplifier 9 is suitably divided and the resultant video and audio information are detected by detectors 10 and 11, respectively.

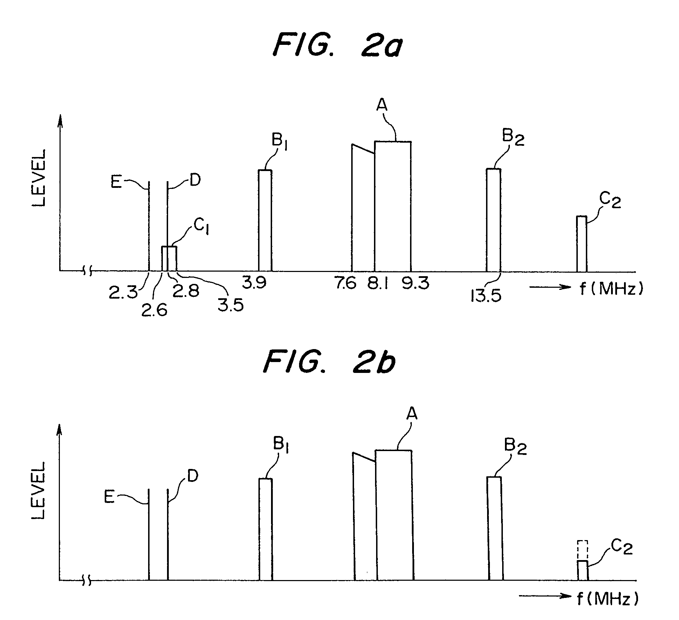

Figure 2a shows an example of the frequency spectrum of the output of the limiter 4. In Figure 2a letter A represents the frequency band of the frequency-modulated video signal, $B_1$ and $B_2$ are the primary sidebands thereof and $C_1$ and $C_2$ are the secondary sidebands thereof, D and E are audio signal carriers when the audio system is a 2-channel or bilingual system. The frequency band width necessary to demodulate the video signal is from 3.9 to 13.5 MHz in the NTSC system in which the primary sidebands are included, because the modulation index is unity or smaller. Therefore, it is usual to set the audio subcarriers at, for example, 2.3 MHz and 2,8 MHz, so that these frequencies are out of the above frequency band necessary for video signal demodulation.

When the video input is composed of a ramp signal combined with a Y (brightness) component, the secondary sideband of the Y component is from 2.6 to 3.5 MHz, which covers at least a portion of the audio subcarriers.

Although the level of the secondary sideband of the video RF signal is lower than that of the primary sideband, it still affects the audio subcarriers, because the level of the audio subcarriers is usually set at around one tenth the video carrier level, and may be further lowered by 6 dB by passage through the limiter 4. Therefore the carrier to noise ratio (C/N) of the frequency-modulated audio signal is degraded, resulting in a degraded S/N ratio and reproduction quality.

Further, in a four channel audio system, a subcarrier of, for example, 47.2 KHz is frequency modulated with audio signals from 2 additional channels, respectively, and these frequency-modulated subcarriers are added to the main channel signals. Then the main carriers of 2.3 MHz and 2.8 MHz are frequency modulated with the resultant signals, respectively. In this case the effect of the secondary and/or higher sidebands of the frequency modulated video signal on the audio signals becomes more severe.

Further, since the dynamic range of the audio information in the conventional video disc type recording and reproducing system, in which an analogue audio signal is directly frequency-modulated, is as small as 60-65 dB, it is relatively difficult to obtain a high quality reproduction signal.

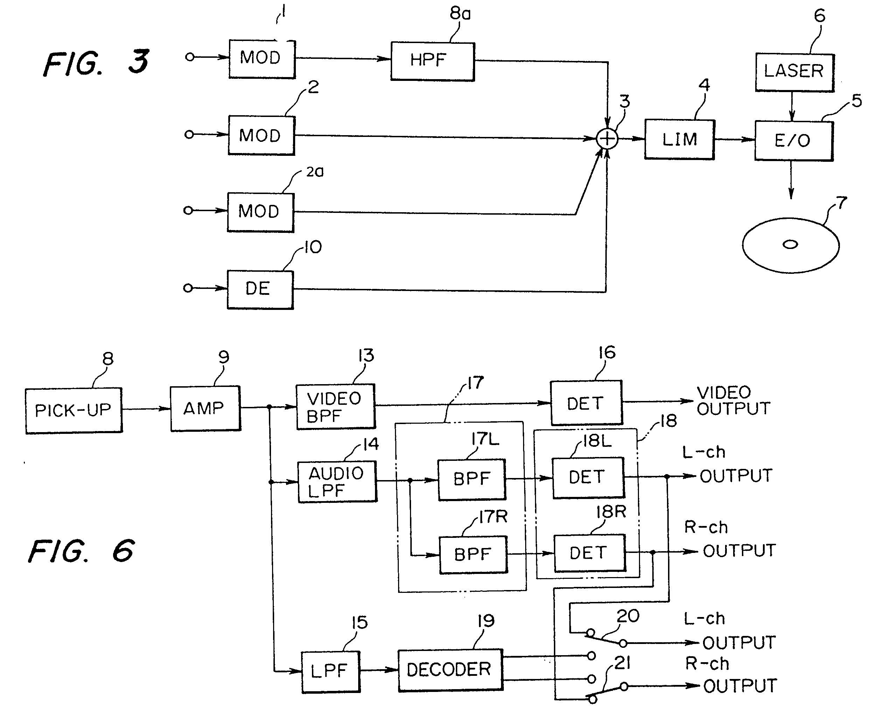

Figure 3 shows an embodiment of the present invention. An encoder 10 has an input to which the audio signal is supplied. An output of the encoder 10 is connected to adder 3. The two audio signals supplied to the respective frequency modulators 2 and 2a are also supplied to the digital encoder 10 and digitised in a time sharing manner using a suitable modulation system such as pulse-code-modulation (PCM), to convert them into a series of pulses which are then added in the adder 3 to the outputs of modulators 2 and 2a. In this case, the eight to fourteen modulation (EFM) system may be used. In such case, the frequency spectrum of the digital format includes pulses having widths of 3T to IIT where T is the bit period of the PCM signal. That is, 3T corresponds to about 720 KHz, 4T to about 540 KHz and IIT to about 200 KHz. These pulses are limited in level to about one tenth the level of the video main carrier and are added to the outputs of filter 8a and the modulators 2 and 2a.

The filter 8a may be a high pass filter (HPF), a band pass filter (BPF), or a band eliminating filter (BEF).

The resultant composite signal from limiter 4 is cut around the zero crossing level and amplified to obtain a pulse-width-modulated signal.

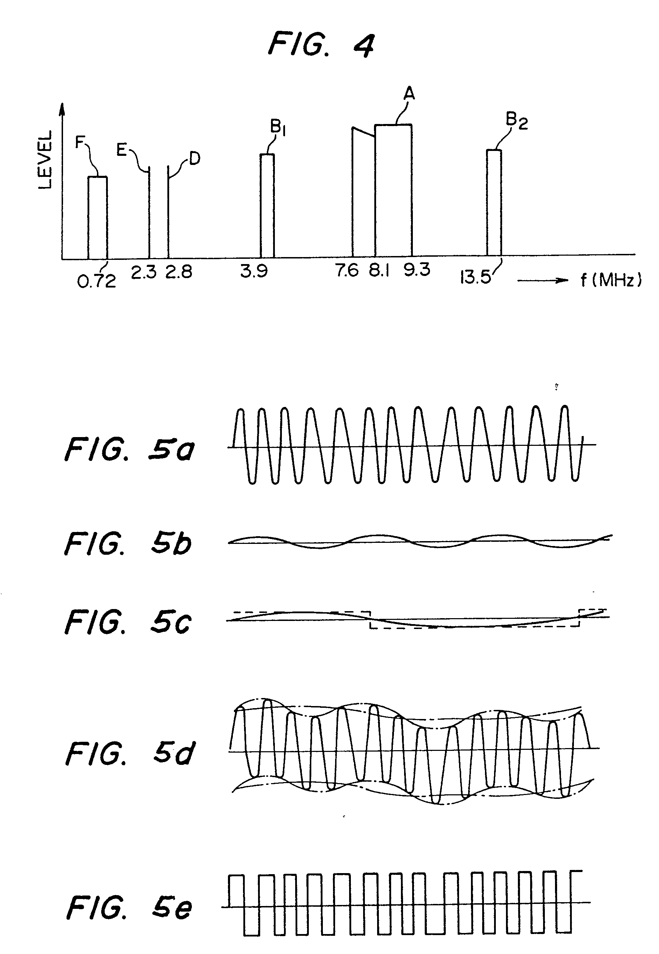

Figure 4 shows the frequency spectrum at the output of the adder 3 in which at the lower end is the spectrum F of the digital audio signal component.

Figure 5 shows the waveforms at various points in the system of Figure 3, in which Figure 5a is the output waveform of the band pass filter 8a, Figure 5b is an audio output from one of the modulators 2 and 2a, Figure 5c is the waveform of the output of the digital encoder 10, Figure 5d is a composite waveform of the output of the adder 3 and Figure 5e is the pulse width modulated output of the limiter 4. In Figure 5c, the output waveform of the digital encoder 10 theoretically takes a step form as shown by the dotted line. However, due to restrictions in the frequency characteristics of the associated circuits, the waveform becomes more as shown by the solid line, in practice, the waveform in Figure 5e is obtained by cutting the waveform in Figure 5d at around the zero crossing levels and amplifying the resulting waveform, or by using a zero level comparator.

It is possible to make the dynamic range of the digitised audio information about 90dB or more, and thus the sound quality can be much improved as compared with recording using direct frequency modulation. Since both the directly frequency-modulated signal and the PCM signal are recorded together with the video signal, either of audio signals can be selectively reproduced.

Figure 6 shows, in block diagram, an embodiment of the reproducing system according to the present invention, which is suitable for use with the recording system of Figure 3. In Figure 6, the readout signal from a pick-up 8 is amplified by an amplifier 9 and supplied to a low pass filter 15, to derive only the digital audio component F of Figure 4, and an output of the filter 15 is decoded by a decoder 19.

The two audio signals are both FM processed and PCM processed. That is, the signal picked-up by the pick-up 8 contains the FM processed video signal, the FM processed audio signals and the PCM processed, time shared, audio signals. The picked-up signal is amplified by the amplifier 9 and supplied to a video band pass filter 13, an audio low pass filter 14 and a low pass filter 15, by which frequency ranges covering the secondary and higher order sidebands of the video signal are removed. An output of the video band pass filter 13 is demodulated by the detector 16 to provide a video output.

The audio signal component of the signal supplied from the amplifier 9 to the audio low pass filter 14 is passed through the latter and supplied to band pass filters 17R and 17L. The filter 17L is designed to pass the frequency band centered at, for example, 2.3 MHz, and the filter 17R is designed to pass the frequency band centered at 2.8 MHz. Therefore the frequency band centered at 2.3 MHz is demodulated by detector 18L to provide a L-channel audio output, and in a similar manner to the frequency band centered at 2.8 MHz is passed through the band pass filter 17R and demodulated by detector 18R to provide an R-channel audio output.

The signal supplied to the low pass filter 15 is rejected, except for the frequency band covering the frequency spectrum F composed of the time shared PCM components shown in Figure 4. Therefore, the frequency component F is supplied to the decoder 19 and decoded separately to provide L-channel and R-channel outputs.

The L and R channel outputs from the detectors 18L and 18R and the L and R channel outputs from the decoder 19 are selectable by means of a pair of switches 20 and 21. Each of the switches 20 and 21 has a pair of contacts, one contact of which is connected to the outputs of the detectors 18L and 18R, respectively, and the other contact of which is connected to the outputs of the decoder 19. Therefore, by operating the switches 20, 21, it is possible to derive L and R channel audio outputs from either the detectors 18L and 18R or the decoder 19.

## Claims

1. A video disc type recording and reproducing system, comprising recording means and reproducing means, the recording means comprising a first frequency modulator (1) for modulating a video signal, a second frequency modulator (2) for modulating an audio signal, an adder circuit (3) for adding the modulated video and audio signals, a limiter (4) connected to an output of the adder circuit (3) for pulse width modulating the output signal from the adder circuit (3), and an electrical/optical modulator (5) connected to the limiter (4) characterised by filter means (8a), connected between an output of the first frequency modulator (1) and the adder circuit (3), for removing a frequency component of the frequency-modulated video signal which covers a frequency component of the frequency modulated audio signal from the second frequency modulator (2), to prevent second and higher order sidebands of the modulated video signal interfering with the audio signal multiplexed with it, and wherein the recording means further comprises a digital encoder (10) connected in parallel with the second frequency modulator (2).

2. A system according to claim 1, wherein the filter means (8a) comprises a band eliminating filter for removing only a lower secondary sideband of the frequency-modulated video signal.

3. A system according to claim 1, wherein the filter means comprises a high pass filter (8a) for passing components having a frequency higher than the lower secondary sideband of the modulated video signal.

4. A system according to claim 1, wherein the filter means comprises a band pass filter.

5. A system according to claim 2, wherein the recording means further comprises a compensating circuit connected between the band eliminating filter (8a) and the adder circuit (3), the compensating circuit having a substantially constant gain and a group delay characteristic so that it substantially cancels out the group delay characteristic of the band eliminating filter (8a).

6. A system according to any one of the preceding claims, further including a third frequency modulator (2a) for modulating a second audio signal, an output of the third frequency modulator being supplied to the adder circuit (3).

7. A system according to claim 6, wherein the digital encoder (10) receives the first and second audio signals and digitises them in a time sharing manner, ouputs of the digital encoder (10) and of the third frequency modulator (2a) being supplied to the adder circuit (3).

8. A system according to any one of the preceding claims, wherein the reproducing means includes an information pick-up (8) an amplifier (9) coupled to the pick-up, and at least a video band pass filter (13) and an audio low pass filter (14) coupled in parallel to the output of the amplifier (9).

9. A system according to claim 8, wherein an output of the video band pass filter (13) is coupled to video detector means (16), and an output of the audio low pass filter (14) is coupled to audio detector means (18) via audio band pass filter means (17).

10. A system according to claim 9, wherein the recording means includes a digital encoder (10) connected in parallel with the second frequency modulator (2) and receives an audio input, and wherein the reproducing means includes a series low pass filter (15) passing digitised audio components of the signal output by the amplifier (9), and a decoder (19) receiving an output of the series low pass filter (15).

11. A system according to claim 10, further including switching means (20, 21) for selecting an output of either the audio detector means (18) or of the decoder (19).

## Patentansprüche

1. Videoplattenaufzeichnungs- und Wiedergabesystem, enthaltend eine Aufzeichnungseinrichtung in einer Wiedergabeeinrichtung, wobei die Aufzeichnungseinrichtung enthält: einen ersten Frequenzmodulator (1) zum Modulieren eines Videosignals, einen zweiten Freuqenzmodulator (2) zum Modulieren eines Audiosignals, eine Addierschaltung (3) zum Addieren der modulierten Video- und Audiosignale, einen Begrenzer (4), der mit dem Ausgang der Addierschaltung (3) zur Pulsbreitenmodulation des Ausgangssignals von der Addierschaltung (3) verbunden ist, und ein elektrooptischer Modulator (5), der mit dem Begrenzer (4) verbunden ist, gekennzeichnet durch eine Filtereinrichtung (8a), die zwischen einen Ausgang des ersten Frequenzmodulators (1) und die Addierschaltung (3) geschaltet ist, um eine Frequenzkomponente des frequenzmodulierten Videosignals, die eine Frequenzkomponente des frequenzmodulierten Audiosignals von dem zweiten Frequenzmodulator (2) überdeckt, zu entfernen, um Seitenbänder zweiter und höherer Ordnung des modulierten Videosignals, die mit dem damit multiplexierten Audiosignal interferieren, zu verhindern, und wobei die Aufzeichnungseinrichtung weiterhin einen digitalen Codierer (10) enthält der zu dem zweiten Frequenzmodulator (2) parallel geschaltet ist.

2. System nach Anspruch 1, bei dem die Filtereinrichtung (8a) ein Bandunterdrückungsfilter enthält, um nur ein unteres sekundäres Seitenband des frequenzmodulierten Videosignals zu beseitigen.

3. System nach Anspruch 1, bei dem die Filtereinrichtung ein Hochpaßfilter (8a) aufweist, um Komponenten durchzulassen, die eine Frequenz haben, die höher als das untere sekundäre Seitenband des modulierten Videosignals sind.

4. System nach Anspruch 1, bei dem die Filtereinrichtung ein Bandpaßfilter enthält.

5. System nach Anspruch 2, bei dem die Aufzeichnungseinrichtung weiterhin eine Kompensationsschaltung enthält, die zwischen das Bandunterdrückungsfilter (8a) und die Addierschaltung (3) geschaltet ist, welche Kompensationsschaltung eine im wesentlichen konstante Verstärkung und eine Gruppenverzögerungscharakteristik aufweist, derart, daß sie die Gruppenvezögerungscharakteristik des Bandunterdrükkungsfilters (8a) im wesentlichen beseitigt.

6. System nach einem der vorhergehenden Ansprüche weterhin enthaltend einen dritten Frequenzmodulator (2a) zum Modulieren eines zweiten Audiosignals, wobei der Ausgang des dritten Frequenzmodulators der Addierschaltung (3) zugeführt ist.

7. System nach Anspruch 6, bei dem der digitale Codierer (10) die ersten und zweiten Audiosignale empfängt und sie in Zeitteiltechnik digitalisiert, wobei die Ausgänge des digitalen Codierers (10) und des dritten Frequenzmodulators (2a) der Addierschaltung (3) zugeführt sind.

8. System nach einem der vorhergehenden Ansprüche, bei der die Wiedergabeeinrichtung einen Informationsabtaster (8), einen Verstärker (9), der mit dem Abtaster verbunden ist, und wenigstens ein Videobandpaßfilter (13) und ein Audiotiefpaßfilter (14) enthält, die parallel an den Ausgang des Verstärkers (9) angeschlossen sind.

9. System nach Anspruch 8, bei dem ein Ausgang des Videobandpaßfilters (13) mit einer Videodetektoreinrichtung (16) verbunden ist, und ein Ausgang des Audiotiefpaßfilters (14) mit Audiodetektoreinrichtungen (18) über Audiobandpaßfiltermittel (17) verbunden ist.

10. System nach Anspruch 9, bei dem die Aufzeichnungseinrichtung einen digitalen Codierer (10) enthält, der zu dem zweiten Frequenzmodulator (2) parallel geschaltet ist und einen Audioeingang erhält, und wobei die Wiedergabeeinrichtung ein Serientiefpaßfilter (15) zum Durchlassen digitalisierter Audiokomponenten des von dem Verstärker (9) abgegebenen Signals und einen Decodierer (19), der einen Ausgang des Serientiefpaßfilters (15) aufnimmt, enthält.

11. System nach Anspruch 10, weiterhin enthaltend Schaltereinrichtungen (20, 21) zum Auswählen des Ausgangs entweder der Audiodetektoreinrichtung (18) oder des Decodierers (19).

**Revendications**

1. Système à disque vidéo d'enregistrement et de reproduction dont les moyens d'enregistrement comportent un premier modulateur de fréquence (1) pour la modulation d'un signal vidéo, un deuxième modulateur de fréquence (2) pour la modulation d'un signal audio, un circuit cumulateur (3) pour cumuler les signaux vidéo et audio modulés, un limiteur (4) raccordé à la sortie du circuit cumulateur (3) pour la modulation de la largeur d'impulsion du signal de sortie venant du circuit cumulateur (3), et un modulateur électrique-optique (5) raccordé au limiteur (4), caractérisé par des moyens de filtrage (8a), raccordés entre une sortie du premier modulateur de fréquence (1) et du circuit cumulateur (3), pour retirer du deuxième modulateur de fréquence (2) un élément de fréquence du signal vidéo à fréquence modulée recouvrant un élément de fréquence du signal audio à fréquence modulée, afin d'éviter l'intervention de bandes latérales de deuxième ou de rang supérieur du signal modulé vidéo avec lequel le signal audio est multiplexé, lesdits moyens d'enregistrement comportant également un encodeur digital (10) raccordé en parallèle avec le deuxième modulateur de fréquence (2).

2. Système selon la 1ère revendication, dont les moyens de filtrage (8a) prévoient un filtre éliminateur de bande pour éliminer exclusivement une bande latérale inférieure de signal vidéo à modulation de fréquence.

3. Système selon la 1ère revendication, dont les moyens de filtrage (8a) prévoient un filtre passe-haut admettant le passage d'éléments de fréquence supérieure à celle de la bande latérale secondaire inférieure du signal modulé vidéo.

4. Système selon la 1ère revendication, dont les moyens de filtrage comportent un filtre passe-bande.

5. Système selon la 2ème revendication, dont les moyens d'enregistrement prévoient également un circuit compensateur ( ) raccordé entre le filtre éliminateur de bande (8a) et le circuit cumulateur (3), le circuit compensateur ayant un gain principalement constant et une caractéristique de groupe à retard afin d'éliminer principalement la caractéristique de retard du filtre éliminateur de bande (8a).

6. Système selon l'une quelconque des revendications précédentes, ayant également un troisième modulateur de fréquence (2a) pour moduler un deuxième signal audio, une sortie du troisième modulateur de fréquence étant amenée au circuit cumulateur (3).

7. Système selon la 6ème revendication, dont l'encodeur numérique (10) reçoit les premiers et deuxièmes signaux audio et les numérise en temps partagé, les sorties d'encodeur numérique (10) et d'u troisième modulateur de fréquence (2a) étant amenés au circuit cumulateur (3).

8. Système selon l'une quelconque des revendications précédentes, dont les moyens de reproduction prévoient un capteur de renseignements (8) et un amplificateur (9) accouplé au capteur, et au moins un filtre passebande vidéo (13) et un filtre passe-bas audio (14) accouplé en parallèle à la sortie de l'amplificateur (9).

9. Système selon la 8ème revendication, dont une sortie ( ) du filtre passe bande vidéo (13) est accouplée au détecteur vidéo (16) et une sortie ( ) de filtre passe-bas audio (14) est accouplée aux moyens détecteurs audio (18) par les moyens à filtre passe-bande audio (17).

10. Système selon la 9ème revendication, dont les moyens d'enregistrement prévoient un encodeur numérique (10) raccordé en parallèle au deuxième modulateur de fréquence (2) et reçoivent une amenée en audio, et dont les moyens de reproduction comportent un filtre passeb-as en série (15) permettant le passage d'éléments audio numérisés du signal de sortie venant de l'amplificateur (9), et un décodeur (19) recevant une sortie de filtre passe-bas en série (15).

11. Système selon la 10ème revendication, comportant également des moyens de commutation (20, 21) pour la sélection d'une sortie soit des moyens détecteur audio (18) ou du décodeur (19).

## FIG. 1

EP 0 107 295 B1

FIG. 2a

FIG. 2b

FIG. 3

FIG. 6

# FIG. 4

# FIG. 5a

# FIG. 5b

# FIG. 5c

# FIG. 5d

# FIG. 5e